# FASCICULE DE BREVET EUROPEEN

(11) **EP 2 609 029 B1**
(45) Date de publication et mention de la délivrance du brevet: **21.01.2015**
(21) Numéro de dépôt: 11751868.8
(22) Date de dépôt: 26.08.2011
(51) Int. Cl.: B66C 9/10, B65G 65/23, B65G 65/30, B66C 1/62

(54) **DISPOSITIF DE MANUTENTION DE FÛTS, INSTALLATION DE TRANSFERT DE MATERIAU EN POUDRE ET PROCEDE DE TRANSFERT**
VORRICHTUNG ZUR HANDHABUNG VON TROMMELN, GERÄT ZUR ÜBERTRAGUNG VON PULVERSTOFFEN UND ÜBERTRAGUNGSVERFAHREN
DEVICE FOR HANDLING DRUMS, EQUIPMENT FOR TRANSFERRING POWDER MATERIAL, AND TRANSFER METHOD

(30) Priorité: 26.08.2010 FR 1056786
(43) Date de publication de la demande: 03.07.2013
(73) Titulaire: Areva NC, 75009 Paris (FR)
(72) Inventeur: PERESSONI, Yvan, F-30200 Bagnols Sur Ceze (FR)
(74) Mandataire: Ilgart, Jean-Christophe
(86) Numéro de dépôt international: PCT/EP2011/064694
(87) Numéro de publication internationale: WO 2012/025610

(56) Documents cités:
- JP-A- 2013 053 000
- US-A- 2 848 128
- US-A- 3 103 282
- US-A- 3 623 620
- US-A- 5 791 861
- US-A1- 2005 115 982
- US-B1- 6 254 330

## Description

### DOMAINE TECHNIQUE ET ART ANTÉRIEUR

La présente invention se rapporte à un dispositif de manutention de fûts contenant un matériau en poudre, à une installation de transfert de matériau en poudre et à un procédé de transfert mettant en oeuvre une telle installation. Le matériau en poudre est contenu dans des fûts, il peut s'agir par exemple de l'oxyde d'uranium (UO₂) pour la fabrication de pastilles de combustibles nucléaires.

Un dispositif similaire, destiné à la manutention de fûts et de rouleaux de papier est divulgué dans le document US5791861 A1. Les pastilles de combustible nucléaire, comme par exemple les pastilles de MOX (mélange d'oxyde de plutonium et d'oxyde d'uranium), sont fabriquées à partir de matériaux en poudre mélangés, pressés en forme de pastilles et ensuite frittés.

Une partie au moins du ou des matériaux en poudre est acheminée dans des fûts étanches, vers une installation de fabrication de pastilles. Le contenu des fûts est ensuite vidé dans des trémies vers des zones de stockage.

De manière connue, les fûts sont ouverts, puis retournés au dessus d'une trémie disposée en entrée de l'installation, le matériau sous forme de poudre s'écoule alors dans la trémie, jusqu'à un lieu de stockage avant son utilisation. Un système de confinement est prévu entre le fût et la trémie.

D'une part, la poudre étant disposée directement dans les fûts, ceux-ci sont pollués, ils sont alors considérés comme des déchets nucléaires et doivent être traités comme tels. Or, on recherche en permanence à réduire la quantité de déchets produite. D'autre part, la trémie est elle aussi polluée. Un travail long d'assainissement de la trémie est alors requis. En outre, le système de confinement mis en oeuvre est relativement complexe.

C'est par conséquent un but de la présente invention d'offrir une installation et un procédé de transfert de la poudre contenu dans un fût vers une zone de stockage qui assure un confinement efficace de la poudre, et l'isole des éléments extérieurs.

### EXPOSÉ DE L'INVENTION

Le but précédemment énoncé est atteint par une installation de transfert de poudre d'un fût vers une zone de stockage comportant une trémie connectée à cette zone de stockage et un sas de confinement en amont de la trémie connecté de manière étanche à celle-ci, ledit sas comportant une ouverture dans sa partie supérieure à l'opposé de la trémie, obturable de manière étanche, le sas comportant également des trappes d'accès étanche dans ses parois latérales pour permettre aux opérateurs d'intervenir sur le contenu du sas. Par ailleurs, la poudre stockée dans le fût est confinée au moins dans un premier sac à l'intérieur du fût. En outre, un système de manipulation permet de transférer le sac de poudre contenu dans le fût à l'intérieur du sas de confinement.

En d'autres termes, on dispose une boîte à gant sur la trémie, qui peut être ouverte à son extrémité supérieure pour la mise en place de sacs contenant la poudre et qui lorsqu'elle est fermée assure un confinement de la poudre et permet d'intervenir sur les sacs de poudre en toute sécurité à travers les ronds de gant de la boîte à gant.

De manière particulièrement avantageuse, un sac garnit l'intérieur du fût, dans lequel le sac contenant directement la poudre est disposé.

De manière également particulièrement avantageuse, une enveloppe consommable garnit l'intérieur de la boîte à gant pour éviter tout transfert entre l'intérieur et l'extérieur de la boîte à gant, limitant ainsi une pollution de la partie extérieure de la boîte à gant et/ou une pollution de la poudre.

La présente invention a alors pour objet un dispositif de manutention de fût vers un ensemble trémie pour le transfert d'au moins un matériau en poudre contenu dans le fût vers une zone de stockage dudit matériau, ledit fût contenant au moins un sac fermé contenant ledit au moins un matériau en poudre, ledit dispositif de manutention comportant un châssis destiné à être suspendu à un palan, un corps cylindrique creux monté dans le châssis apte à pivoter autour d'un axe horizontal perpendiculaire à un axe longitudinal du corps cylindrique creux, le corps cylindrique creux comportant une première extrémité longitudinale ouverte, une deuxième extrémité longitudinale munie de moyens d'obturation de ladite deuxième extrémité, lesdits moyens d'obturation étant escamotables, le corps cylindrique creux présentant des dimensions intérieures permettant l'introduction du fût dans le corps cylindrique creux, des moyens d'immobilisation du fût dans le corps cylindrique creux et des moyens aptes à provoquer une rotation de 180° du corps cylindrique creux autour de son axe de rotation par rapport au châssis, ledit corps cylindrique contenant le fût étant destiné à pénétrer dans l'ensemble trémie.

Selon une caractéristique additionnelle, le dispositif de manutention de fût selon la présente invention comporte des moyens de verrouillage du corps cylindrique creux dans une position de retournement.

Par exemple, les moyens d'obturation escamotables comportent au moins deux pétales articulés en rotation sur le corps cylindrique creux et des moyens d'actionnement desdits pétales comprenant au moins un actionneur linéaire monté sur le corps cylindrique creux lié aux pétales par des biellettes.

De préférence, l'actionneur linéaire est monté sur le corps cylindrique creux à l'opposé de son extrémité obturée, ledit actionneur linéaire étant connecté aux biellettes au moyen d'un tube mobile le long de l'axe du corps cylindrique creux et formant une paroi extérieure dudit corps cylindrique creux. Avantageusement, l'actionneur linéaire est de type irréversible.

Dans un exemple de réalisation, les moyens d'immobilisation sont tels qu'ils viennent en contact avec le fût dans sa partie médiane. Les moyens d'immobilisation peuvent comporter au moins deux mors de serrage destinés à venir en contact avec la surface extérieure du fût et des moyens aptes à appliquer et à maintenir appuyés les mors de serrage sur le fût, qui sont par exemple formés par des poignées accessibles de l'extérieur du corps cylindrique creux et agissant sur les mors de serrage par des mécanismes à genouillère.

Dans un exemple de réalisation, les moyens de retournement comportent une roue dentée en prise avec l'axe de rotation du corps cylindrique creux, une roue dentée sur le châssis, un élément de transmission reliant les deux roues dentées, et des moyens de mise en rotation de la roue dentée sur le châssis. Les moyens de mise en rotation de la roue dentée sur le châssis peuvent comporter un volant de manoeuvre relié à ladite roue dentée par un réducteur.

Selon une caractéristique additionnelle, le dispositif de manutention de fût selon l'invention comporte de préférence un dispositif support du châssis pour permettre son stockage et le retournement du corps cylindrique creux.

La présente invention a également pour objet un ensemble trémie comportant une trémie destinée à être raccordée par son extrémité aval à un réservoir de matériau en poudre et une enceinte étanche montée de manière étanche sur l'extrémité aval de la trémie, ladite enceinte comportant une paroi latérale, un fond du côté de la trémie et une ouverture opposée audit fond destinée à permettre l'introduction, dans l'enceinte, du fût maintenu dans le corps cylindrique creux du dispositif de manutention selon la présente invention, le fût étant en position retournée l'ouverture vers le bas, l'enceinte comporte également un couvercle pour fermer et protéger mécaniquement ladite ouverture, des moyens d'accès étanche pour intervenir dans l'enceinte et des moyens de transfert de manière étanche des objets entre l'intérieur de l'enceinte et l'extérieur de celle-ci, le fond de l'enceinte étant formé au moins en partie par des grilles disposées entre l'enceinte et la trémie.

On prévoit alors par exemple que les dimensions intérieures de l'enceinte et de l'ouverture de l'enceinte sont telles qu'elles permettent l'introduction du corps cylindrique creux et du châssis entourant le corps cylindrique creux dans l'enceinte.

L'ensemble trémie comporte avantageusement des moyens de génération d'une dépression au sein de l'ensemble trémie. De préférence, les moyens de génération de dépression génèrent une dépression en azote. L'ensemble trémie peut comporter de manière additionnelle des moyens de dépression en air.

Les moyens d'accès étanche et les moyens de transfert de manière étanche sont avantageusement formés dans la paroi latérale et sont par exemple des ronds de gant et des ronds de sac respectivement, de type boîte à gant respectivement.

L'ensemble trémie selon la présente invention peut comporter de préférence une enveloppe consommable garnissant l'intérieur de la paroi latérale de l'enceinte et le fond de l'enceinte.

La présente invention a également pour objet une installation de transfert de poudre d'un fût dans un réservoir comportant au moins un dispositif de manutention selon la présente invention et un ensemble trémie selon la présente invention.

La présente invention a également pour objet un procédé de transfert de matériau en poudre contenu dans un fût vers un réservoir dans une installation selon la présente invention, le matériau en poudre étant stocké dans au moins un premier sac dans le fût, comportant les étapes suivantes :
- ouverture du fût,
- mise en place du corps cylindrique creux autour du fût, les moyens d'obturation étant disposés au dessus de l'ouverture du fût,
- immobilisation du fût dans le corps cylindrique creux,
- retournement du fût,
- mise en place du corps cylindrique creux et du fût dans l'enceinte,
- actionnement des moyens d'obturation pour permettre la chute dudit premier sac de matériau en poudre, ledit premier sac reposant sur la grille,
- retrait du corps cylindrique creux,
- fermeture de l'ouverture de l'enceinte de manière étanche,
- mise en route du système de dépression,
- ouverture du premier sac,
- vidange du premier sac dans l'enceinte,
- retrait du premier sac.

Le fût comporte avantageusement un deuxième sac garnissant l'intérieur du fût dans lequel est disposé le premier sac contenant directement le matériau en poudre, comportant l'étape de mise en place d'une bonnette sur l'ouverture du fût après ouverture de celui-ci, le deuxième sac garnissant le fût et la bonnette chutant dans l'enceinte en même temps que le premier sac contenant directement le matériau en poudre, ledit deuxième sac étant perforé lors de l'ouverture du premier sac contenant directement la poudre.

Le procédé de transfert selon la présente invention peut comporter selon une caractéristique avantageuse, avant l'introduction du corps cylindrique creux et du fût dans l'enceinte, l'étape de mise en place d'une enveloppe dans l'enceinte recouvrant sa paroi latérale et son fond, ladite enveloppe étant perforée lors de l'ouverture du sac contenant directement la poudre.

Le procédé de transfert selon la présente invention peut comporter une étape de mise en place d'une bonnette sur l'ouverture de l'enceinte après le retrait du corps cylindrique creux.

De manière très avantageuse, pour effectuer l'étape de retournement, le châssis peut être mis en place sur le support de châssis.

### BRÈVE DESCRIPTION DES DESSINS

La présente invention sera mieux comprise à l'aide de la description qui va suivre et des dessins en annexe et sur lesquels :
- la figure 1 est une vue d'ensemble de face d'un exemple de réalisation d'une installation de transfert de poudre selon la présente invention,
- la figure 2 est une vue de face d'un ensemble trémie selon la présente invention, avec, représenté en pointillé, un fût à l'intérieur de l'ensemble trémie,
- la figure 3A est une vue d'un côté de l'ensemble trémie de la figure 2, l'ensemble trémie étant fermé de manière étanche,
- la figure 3B est une vue partielle d'un autre côté de l'ensemble trémie de la figure 2, l'ensemble trémie étant fermé de manière étanche, le côté présentant des ronds de gant et un rond de sac,
- la figure 3C est une vue de dessus de la figure 3A avec le fût dans l'ensemble trémie,
- la figure 3D est une vue en coupe transversale au niveau du fond de l'enceinte de l'ensemble trémie,
- la figure 4A est une vue de face du dispositif de manutention de fût selon la présente invention avec un fût, dans une position "ouverture du fût vers le bas",
- la figure 4B représente deux demi-vues en coupe longitudinale du dispositif de manutention de la figure 4A, la demi-vue de gauche représentant un état de "prise de fût" et la demi-vue de droite représentant un état "fût retourné",
- la figure 4C est une vue de face du dispositif de manutention de fût de la figure 4A sur une chaise de stockage et de retournement,
- la figure 4D est une vue de détail du dispositif de manutention de fût de la figure 4A au niveau de moyens de verrouillage du fût en position retournée ;
- la figure 5 est une vue en coupe transversale du dispositif de manutention de la figure 4B au niveau de moyens de serrage du fût, ceux-ci étant sur la demi-vue de gauche en position desserrée et sur la demi-vue de droite en position serrée sur le fût,
- la figure 6 est une vue en coupe longitudinale schématique d'un fût particulièrement adapté à l'installation selon la présente invention,
- les figures 7A et 7B sont des représentations schématiques de différentes étapes du procédé de transfert selon la présente invention.

### EXPOSÉ DÉTAILLÉ DE MODES DE RÉALISATION PARTICULIERS

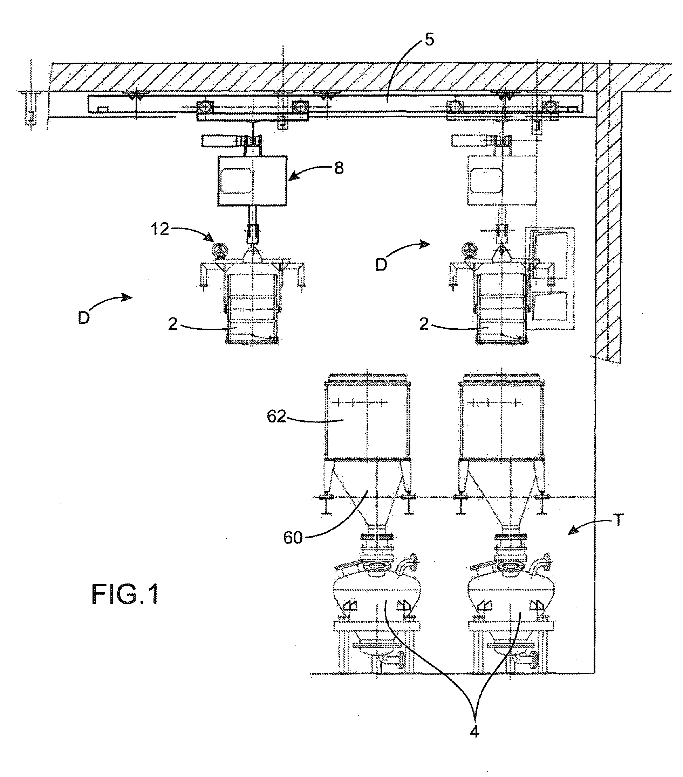

Sur la figure 1, on peut voir une vue de l'ensemble de l'installation de transfert selon la présente invention, comportant un dispositif de manutention D de fûts 2 et un ensemble trémie T.

Dans l'exemple représenté, l'installation comporte deux dispositifs de manutention de fût D et deux ensembles trémies T. Un seul dispositif de manutention D de fûts 2 et un seul ensemble trémie T seront décrits en détail.

Chaque ensemble trémie T est connecté de manière étanche à une zone de stockage de poudre 4.

Le dispositif de manutention D comporte, dans l'exemple représenté, un pont roulant 5 et un chariot 6 se déplaçant sur le pont roulant 5 et un palan 8 apte à déplacer verticalement le fût. Le dispositif de manutention comporte des moyens d'immobilisation 10 du fût et des moyens pour provoquer son retournement 12, de sorte qu'il passe d'une position "ouverture en haut" à une position "ouverture en bas".

Le pont roulant comporte au moins un rail et s'étend entre une zone de stockage des fûts et l'ensemble trémie.

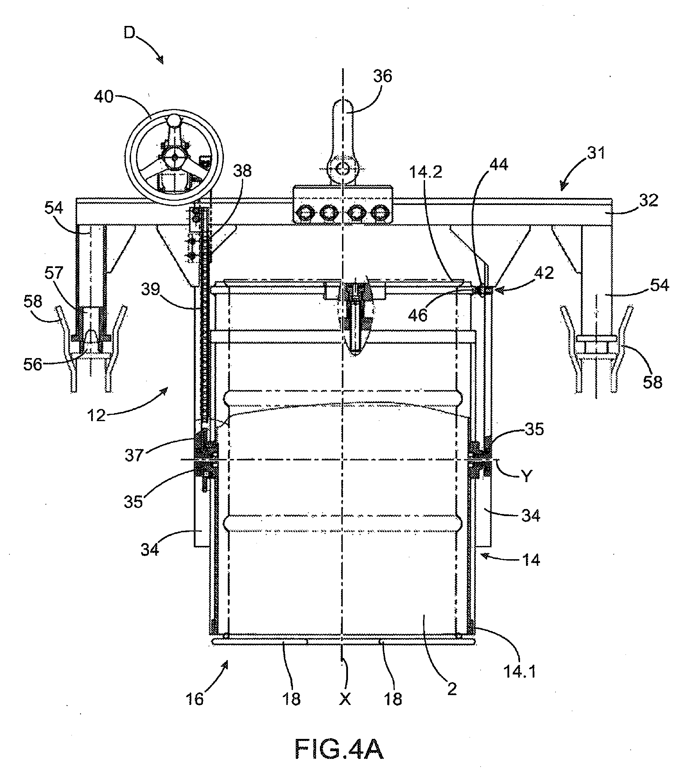

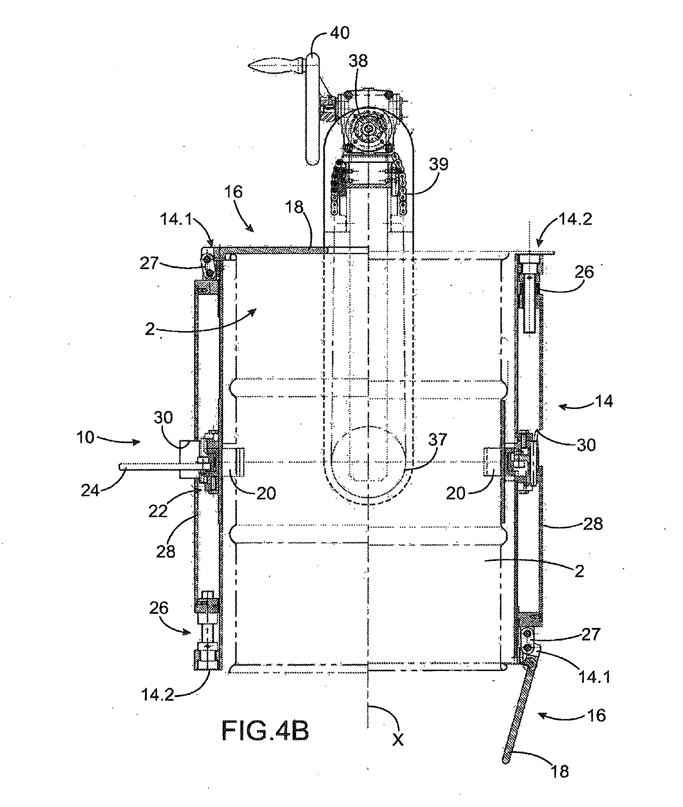

Sur les figures 4A et 4B, on peut voir le dispositif de manutention D du fût comportant le système d'immobilisation 10 du fût 2 et le système de retournement 12 du fût 2.

Le dispositif de manutention 10 comporte un corps cylindrique creux 14 d'axe longitudinal X destiné à venir entourer le fût 2. Le corps cylindrique creux 14 est ouvert à ses deux extrémités longitudinales 14.1, 14.2 et comporte des moyens obturateurs 16 de l'une des extrémités longitudinales 14.1 du corps cylindrique creux 14.

De préférence, la section transversale du corps cylindrique creux 14 correspond à celle du fût 2. Dans l'exemple représenté, le fût 2 a une section transversale circulaire et le corps cylindrique creux a une section transversale également circulaire. En variante, le fût pourrait avoir une section polygonale ou elliptique, dans ce cas le corps cylindrique creux aurait de préférence une section polygonale ou elliptique correspondante.

Dans l'exemple représenté, les moyens obturateurs 16 sont formés par quatre pétales 18 en forme de quarts de disque articulés en rotation sur le corps cylindrique creux 14 autour d'axes orthogonaux à l'axe longitudinal X, de sorte à obturer ou non l'extrémité longitudinale 14.1. Les quatre pétales 18 sont visibles sur la figure 4B.

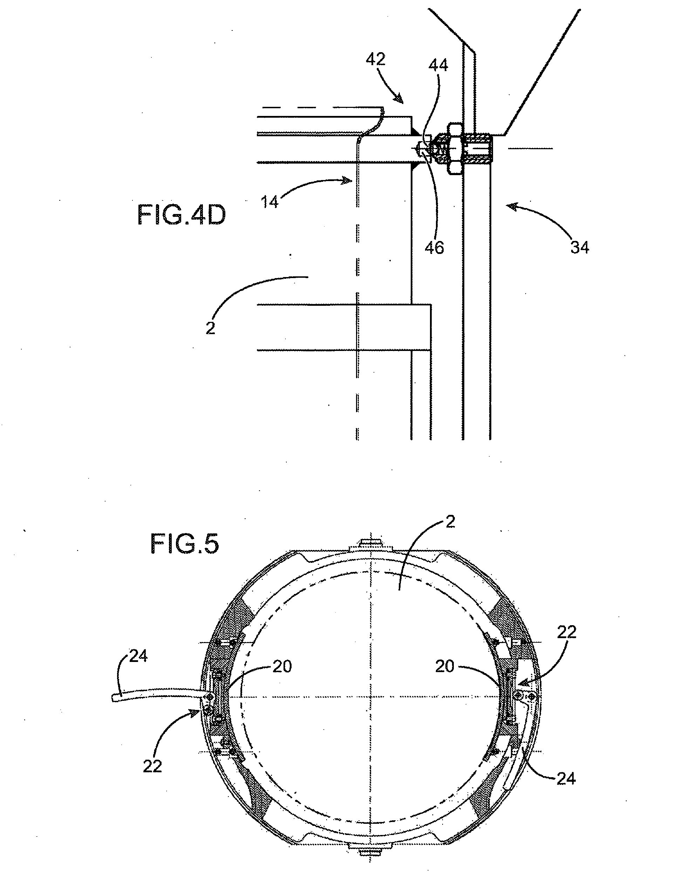

Les moyens d'immobilisation 10 du fût assurent l'immobilisation longitudinale et transversale du fût 2 à l'intérieur du corps cylindrique creux 14 par serrage. Ceux-ci sont plus particulièrement visibles sur la figure 5. Les moyens d'immobilisation sont prévus, dans l'exemple représenté, sensiblement à mi-hauteur du corps cylindrique creux. Ces moyens d'immobilisation 10 comportent au moins deux mors de serrage 20 destinés à être appliqués contre la face extérieure du fût, une articulation à genouillère 22 et une poignée 24 associées à chacun des mors. Les axes d'articulation des genouillères sont sensiblement parallèles à l'axe longitudinal X. Les mors 20 comportent des surfaces incurvées correspondant à la courbure de la surface extérieure du fût. Les mors de serrage 20 sont disposés à l'intérieur du corps cylindrique creux 14, les poignées 24 sont disposées à l'extérieur du corps cylindrique creux 14 pour être accessibles de l'extérieur. Dans l'exemple représenté, les moyens d'immobilisation 10 comportent deux mors de serrage 20 diamétralement opposés. Il est bien entendu qu'un nombre supérieur de mors peut être mis en oeuvre.

Il est bien entendu que tout autre moyen pour appliquer les mors sur le fût peut être mis en oeuvre dans le cadre de la présente invention. En outre, dans l'exemple représenté, le serrage et le desserrage des fûts sont manuels. En variante, ces actions pourraient être automatisées, au moyen de systèmes électriques, pneumatiques... Le serrage effectif du fût est par exemple vérifié visuellement.

Les pétales 18 des moyens obturateurs sont déplaçables entre une position d'obturation telle que représentée sur la figure 4A et une position de passage représentée sur la figure 4B (demi-vue de droite). Dans l'exemple représenté, les moyens pour déplacer les pétales comportent un actionneur linéaire 26 connecté aux pétales 18 via des biellettes 27. Par exemple, une biellette est associée à chaque pétale 18.

L'actionneur linéaire 26 est relié aux quatre biellettes 27 via un élément de transmission 28. Dans l'exemple représenté, l'élément de transmission 28 est formé par un tube mobile 28 formant la paroi extérieure du corps cylindrique creux 14 apte à coulisser le long de l'axe longitudinal X par rapport à une paroi intérieure du corps cylindrique creux 14.

De manière avantageuse, l'actionneur linéaire 26 est un système vis-écrou irréversible, préférentiellement à pas trapézoïdal. Le système vis-écrou est par exemple actionné manuellement à l'aide d'un outil, par exemple une clé à cliquet.

Dans l'exemple représenté, l'actionneur linéaire 26 est disposé au niveau de l'extrémité longitudinale 14.2 du corps cylindrique creux 14 opposée à celle au niveau de laquelle les pétales 18 sont montés. Cette disposition de l'actionneur linéaire permet de manoeuvrer aisément par le dessus lors de la dépose du sac dans la trémie.

En variante, l'actionneur pourrait être situé au plus près des biellettes, ou le tube de transmission pourrait être remplacé par une ou plusieurs tige(s) de transmission connectée(s) aux biellettes via une couronne.

Avantageusement, le dispositif comporte un seul actionneur linéaire 26 pour les quatre pétales 18, cependant on pourrait prévoir de commander chacun des pétales séparément.

Le tube 28 comporte des ouvertures 30 au niveau des moyens d'immobilisation pour permettre la manipulation des poignées 24. Les dimensions des ouvertures 30 sont suffisantes pour éviter tout contact entre les poignées 24 et le tube mobile 28, lors du déplacement du tube mobile 28.

La mise en oeuvre d'un tube formant une paroi extérieure du corps cylindrique creux 14 comme moyen de transmission 28 présente l'avantage d'offrir un dispositif de manutention ayant peu d'éléments mécaniques visibles, le tube 28 formant un capot, ce qui réduit les risques de blessures des opérateurs et les risques d'endommagement en cas de choc accidentel. En outre, le guidage en translation est simplifié. Dans l'exemple représenté, le guidage du coulissement de la paroi extérieure est obtenu par un contact métal/métal. D'autres moyens pourraient bien entendu être prévus.

Le dispositif de manutention comporte également un châssis 31 comprenant une poutre 32, deux montants 34 fixés rigidement sur la poutre, s'étendant perpendiculairement à la poutre 32 vers le bas. Les montants 34 sont disposés verticalement. La poutre 32 est munie d'un moyen de fixation 36 au palan 8 ; dans l'exemple représenté, il s'agit d'un anneau. Le corps cylindrique creux 14 est disposé entre les deux montants verticaux 34 et est articulé en rotation sur ceux-ci autour d'un axe horizontal Y parallèle à la poutre 32. La rotation du corps cylindrique creux 14 permet le retournement du fût 2.

L'articulation en rotation du corps cylindrique creux 14 est réalisée au moyen de deux paliers.

Comme cela est plus particulièrement visible sur la figure 4B, les moyens de retournement 12, dans l'exemple représenté, comportent une première roue dentée 37 fixée sur la face extérieure du corps cylindrique creux 14 et coaxiale à l'axe Y, une deuxième roue dentée 38 articulée sur la poutre 34, d'axe parallèle à l'axe Y, et une chaîne 39 pour transmettre la rotation de la deuxième roue dentée 38 à la première roue dentée 37. La deuxième roue dentée 38 est solidaire en rotation d'un volant de manoeuvre 40. Dans l'exemple représenté, le volant de manoeuvre 40 n'est pas en prise directe avec l'axe de la deuxième roue dentée 38 mais est en prise avec l'axe de la deuxième roue par l'intermédiaire d'un réducteur à roue et vis sans fin irréversible pour faciliter la manoeuvre de retournement. Dans l'exemple représenté, le volant de manoeuvre 40 est dans un plan orthogonal au plan de la deuxième roue dentée 38, facilitant l'implantation du volant de manoeuvre 40.

En variante, la chaîne 39 pourra être remplacée par une courroie dentée. Le volant de manoeuvre pourrait être remplacé par un moteur électrique ou tout autre type d'actionneur.

Il est bien entendu que d'autres moyens peuvent être mis en oeuvre pour retourner le fût, par exemple un moteur en prise directe avec l'axe de rotation du fût.

De manière avantageuse, le dispositif de manutention de fût comporte des moyens de verrouillage 42 du fût en position retournée, représentés sur la figure 4D. Dans l'exemple représenté, ces moyens de verrouillage 42 sont formés par un pion 44 monté dans un des montants verticaux 34 dont une extrémité est destinée à pénétrer dans un alésage 46 du corps cylindrique creux 14. Lorsque l'extrémité du pion 44 pénètre dans l'alésage 46, le corps cylindrique creux 14 est empêché de basculer. L'alésage 46 est réalisé dans le corps cylindrique creux 14 au niveau de son extrémité 14.2 à l'opposé de celle 14.1 munie des pétales, et le pion 44 est monté dans une partie du montant vertical du côté de la poutre 32, le plus loin possible de l'axe de rotation Y. Le pion 44 est par exemple du type pion à bille rétractable muni d'un ressort de rappel. Le pion 44 est alors déplacé par le corps cylindrique 14 lors de la rotation de ce dernier.

Il est bien entendu que d'autres moyens de verrouillage du corps cylindrique creux sont envisageables, par exemple au niveau de l'axe de rotation X.

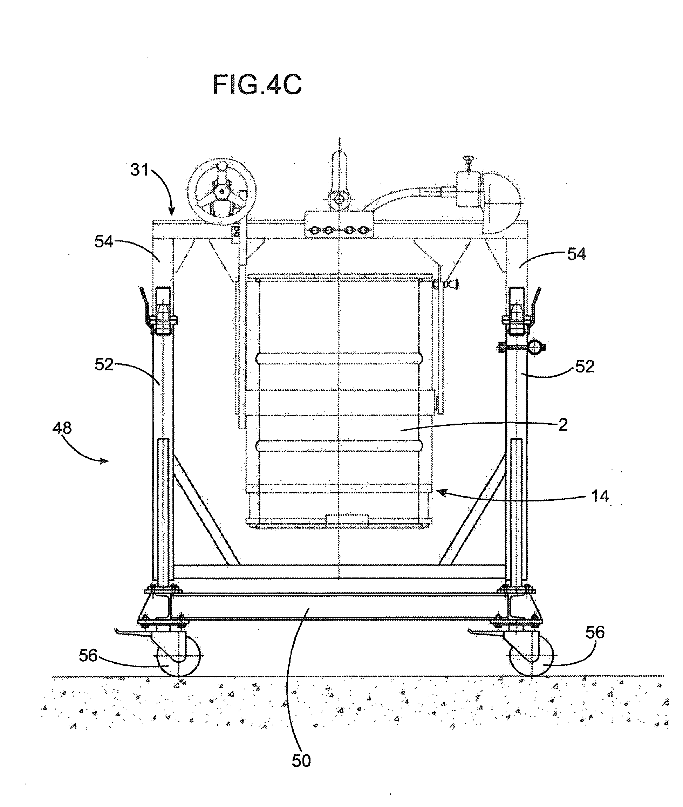

Le châssis 31 est destiné à être disposé sur une chaise 48 représentée sur la figure 4C, d'une part pour son stockage et d'autre part pour permettre le retournement du fût 2. En effet, il est préférable d'effectuer le retournement du fût dans une position d'immobilisation du châssis et non en position suspendue au pont pour réduire les risques d'instabilité et de balancement. En effet, lors du retournement la poudre contenue dans le fût va chuter dans le fût et provoquer un balancement.

La chaise 48 comporte une plateforme 50 et deux supports verticaux 52 destinés à supporter la poutre. Dans l'exemple représenté, le châssis comporte deux entretoises verticales 54 venant en appui sur les deux supports verticaux 52 de la chaise 48. On pourrait prévoir que la poutre 32 vienne directement reposer sur les supports verticaux.

De préférence et comme cela est représenté sur la figure 4A, les extrémités supérieures des supports verticaux comportent des pions 56 destinés à pénétrer dans des alésages 57 prévus dans les entretoises 54 pour assurer un maintien transversal entre les supports verticaux 52 et les entretoises 54. En outre, de manière avantageuse, les pions 56 sont bordés de moyens de guidage 58 pour faciliter la mise en place des entretoises 54 sur les supports verticaux 52. Ces moyens de guidage 58 sont formés par exemple par des pattes délimitant une ouverture évasée se rétrécissant vers l'extrémité les pions. La chaise comporte avantageusement des roulettes 56 pour la déplacer aisément et la disposer sous le dispositif de manutention.

Lorsque le châssis 31 est sur la chaise 48, le retournement du fût se fait aisément, en manipulant le volant de manoeuvre 40.

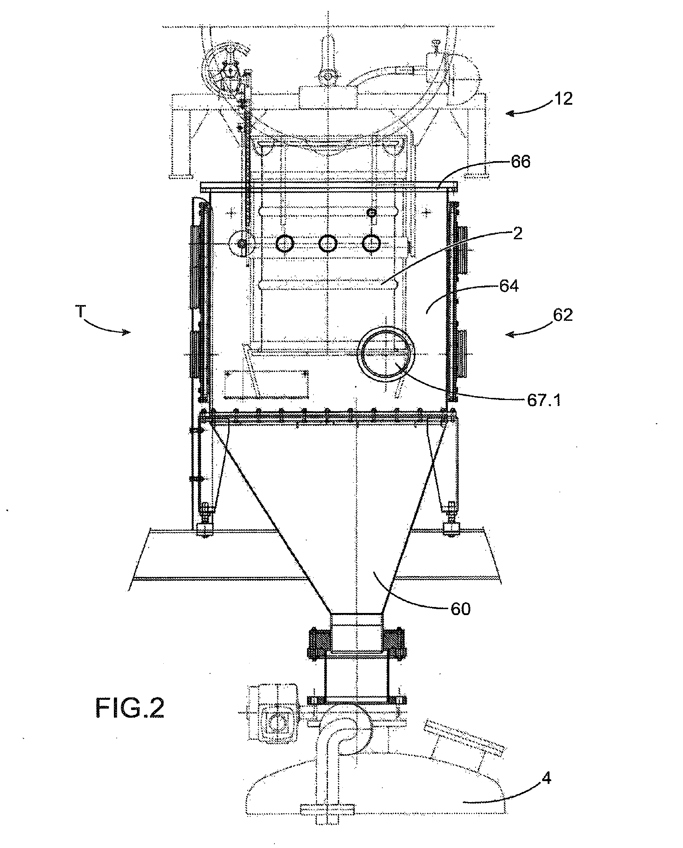

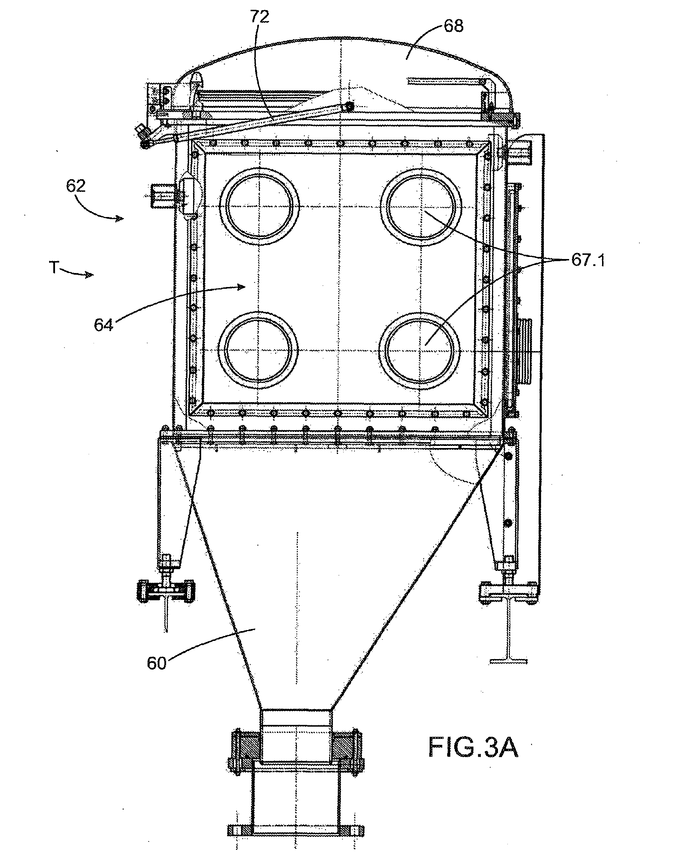

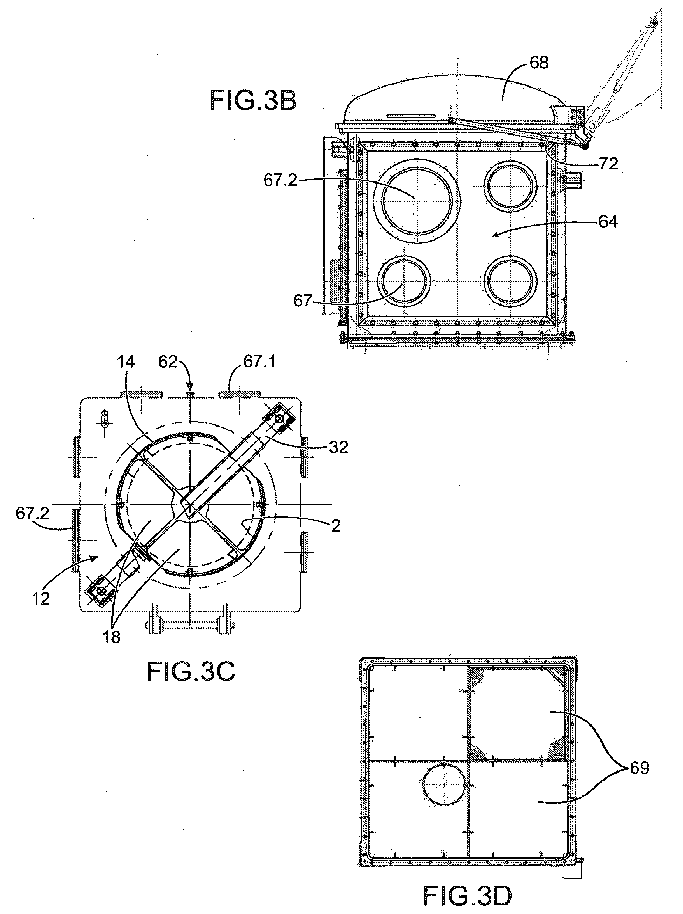

Nous allons maintenant décrire l'ensemble trémie représenté sur les figures 2, 3A et 3D.

L'ensemble trémie est disposé au dessus de moyens de stockage de la poudre formés sur la figure 1 par un réservoir 4 de forme conique.

L'ensemble trémie comporte une trémie 60 disposée directement au dessus du réservoir 4 et connectée de manière étanche à un orifice de remplissage de celui-ci.

En outre, l'ensemble trémie comporte une enceinte étanche 62 dans le prolongement de l'extrémité supérieure de la trémie 60, formant avec la trémie un ensemble étanche.

L'enceinte 62 comporte des parois latérales 64 et une ouverture 66 au niveau de son extrémité supérieure obturable de manière étanche par un couvercle 68, celui-ci étant monté articulé sur l'une des parois autour d'un axe horizontal.

Les dimensions transversales de l'enceinte 62 et celles de l'extrémité supérieure de la trémie 60 sont avantageusement sensiblement identiques, réduisant les zones "mortes" d'accumulation des poudres. Dans l'exemple représenté, la trémie 60 présente une forme pyramidale, et l'enceinte est formée par un parallélogramme rectangle.

Les dimensions intérieures de l'enceinte 62 et de l'ouverture 66 sont telles que l'ensemble formé par le fût 2, le corps cylindrique creux 14 dans lequel est immobilisé le fût et les montants verticaux de part et d'autre du corps cylindrique creux 14, puisse pénétrer dans l'enceinte 62. De manière avantageuse, comme on peut le voir sur la figure 3C, l'enceinte 62 présente une section carrée, la longueur de la diagonale est telle qu'elle permet l'introduction du châssis dans l'enceinte en orientant la poutre le long de la diagonale du carré. Les dimensions de l'enceinte peuvent alors être réduites.

En outre, les parois de l'enceinte sont équipées de ronds de gant 67.1 (figures 3A et 3B) permettant les manipulations à l'intérieur de l'enceinte au moyen d'un gant fixé de façon étanche sur les ronds de gant. Les parois comportent également au moins un rond de sac 67.2 (figure 3B) permettant la fixation étanche de sacs ou conteneurs pour introduire dans ou évacuer de l'enceinte des objets de manière étanche. Les conteneurs peuvent être souples ou rigides.

Au niveau de l'extrémité supérieure de la trémie 60 sont disposées des grilles 69, par exemple quatre reposant sur un cadre représenté sur la figure 3D.

Des moyens d'étanchéité sont prévus entre le couvercle 68 et l'ouverture 66 de l'enceinte 62, ainsi que des moyens de verrouillage 70 du couvercle en position fermée, par exemple sous forme d'une bride.

Le couvercle 68 est avantageusement muni de deux vérins 72 facilitant son ouverture et son maintien en position ouverte.

L'ouverture et la fermeture du couvercle 68 peuvent être manuelles ou automatisées de manière électrique, pneumatique...

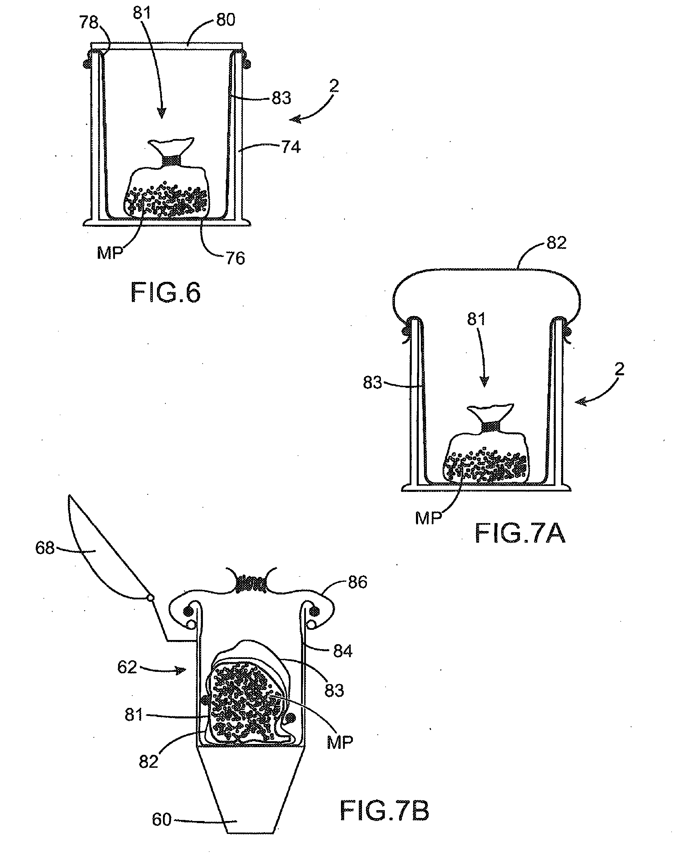

L'enceinte 62 comporte des moyens de fixation d'une enveloppe consommable 84 (visible sur la figure 7B), par exemple un sac en plastique souple, destinée à recouvrir l'intérieur de l'enceinte. Ces moyens de fixation sont prévus au niveau de l'ouverture 66, à l'extérieur de l'enceinte, de sorte que l'enveloppe 84 recouvre le bord de l'ouverture 66. Par exemple, les moyens de fixation sont formés par un anneau pinçant le bord du sac contre la face extérieure de la paroi latérale de l'enceinte.

De manière préférentielle, des moyens (non représentés) créant une dépression à l'intérieur de l'ensemble trémie sont prévus, provoquant une aspiration de la poudre en direction du réservoir.

Sur la figure 6, on peut voir une vue en coupe schématique d'un fût utilisé préférentiellement dans l'installation selon la présente invention, lorsque le matériau en poudre transféré présente un certain danger.

Le fût 2 comporte une paroi latérale 74, un fond 76, une ouverture 78 et un couvercle 80 destiné à obturer de manière étanche l'ouverture 78. Le matériau en poudre MP est confiné dans un premier sac 81 souple scellé. De préférence, un deuxième sac 83 est disposé à l'intérieur du fût et recouvre sa surface intérieure, ce sac recouvre également le bord de l'ouverture 78 du fût. L''intérieur du fût 2 est donc protégé de la poudre.

Il est bien entendu que le fût peut contenir plus d'un premier sac 81 chargé de matériau en poudre, que le matériau en poudre peut être un mélange de différents matériaux et/ou que chaque sac ne comporte pas le même matériau. En outre, on entend par "matériau en poudre", un matériau granulaire dont la taille des particules peut être homogène ou variable, par exemple de quelques micromètres à plusieurs millimètres.

Nous allons maintenant expliquer le déroulement d'un transfert de poudre d'un fût selon la figure 6 dans un réservoir 4.

A l'état initial, le fût 2 comporte son couvercle 80 qui obture de manière étanche le fût contenant la poudre contenu dans le premier sac 81 scellé, lui-même disposé dans le deuxième sac 83 qui recouvre la surface intérieure du fût.

Au début de la phase de transfert, le couvercle 80 est retiré et l'ouverture 78 du fût est recouverte d'une bonnette 82 isolant l'intérieur du fût de l'environnement extérieur, comme on peut le voir sur la figure 7A.

Ensuite, le dispositif de préhension est approché du fût 2 par actionnement du chariot et du palan 8 de sorte que le corps cylindrique creux 14 entoure et recouvre le fût 2, le corps cylindrique creux 14 est disposé de sorte que les pétales 18, qui sont en position fermée, soient disposés vers le haut et recouvrent la bonnette 82 coiffant le fût 2. Cette étape est visible sur la demi-vue de gauche de la figure 4B.

Le fût 2 est ensuite immobilisé dans le corps cylindrique creux 14, par activation des moyens d'immobilisation 10, la poignée 24 est rabattue appliquant les mors 20 contre le fût.

Le dispositif de transfert est ensuite positionné sur la chaise 48.

L'opérateur manipule ensuite le volant de manoeuvre 40 provoquant la rotation du corps cylindrique creux 14 autour de l'axe Y, le corps cylindrique creux 14 est immobilisé dans cette position retournée par les moyens de verrouillage. Les pétales se trouvent désormais en position basse, et la poudre contenue dans le premier sac 81, lors du retournement, a chuté et repose désormais sur les pétales 18. Cette étape est visible sur la figure 4A, le sac 81 n'est cependant pas représenté.

Le corps cylindrique creux 14 est ensuite élevé par le palan 8 pour l'extraire de la chaise 48, puis déplacé en direction de l'ensemble trémie par le chariot de palan le long du pont roulant, jusqu'à ce qu'il se situe au dessus de l'enceinte 62 ouverte de l'ensemble trémie.

L'intérieur de l'enceinte 62 est garni d'un troisième sac ouvert 84.

Le corps cylindrique creux 14 avec le fût 2 retourné est descendu et pénètre dans l'enceinte 62. Lorsqu'il a atteint une position suffisamment basse dans l'enceinte 62 permettant cependant l'ouverture des pétales 18, les pétales 18 sont ouverts par activation de l'actionneur linéaire 26, le tube mobile 28 coulisse vers le haut provoquant la rotation des pétales 18 vers le bas. Cette étape est visible sur la figure 2, les sacs 81 et 83 ne sont pas représentés.

Le premier sac 81 contenant la poudre tombe dans le fond de l'enceinte 62 sur les grilles emportant avec lui la bonnette 82 et le deuxième sac 83.

Le corps cylindrique creux 14 avec le fût 2 vide est retiré de l'enceinte 62 par actionnement du palan 8.

De manière avantageuse, après retrait du châssis et du fût vide, on prévoit de recouvrir l'ouverture 66 de l'enceinte avec une bonnette 86 (figure 7B) avant la fermeture du couvercle 68, ce qui permet de confiner l'enceinte en vue de l'ouverture des sacs et d'éviter tout transfert entre l'intérieur de l'enceinte et l'extérieur. Sur la figure 7B, on peut voir l'ensemble trémie avec le sac de poudre 81 et la bonnette 86.

Ensuite, le couvercle 68 de l'enceinte est abaissé et verrouillé.

Une dépression en air est ensuite appliquée dans l'ensemble trémie pour assurer un confinement dynamique.

Dans le cas où la poudre est de l'oxyde d'uranium, lorsque l'enceinte est fermée, on effectue de manière particulièrement avantageuse un inertage à l'azote de l'intérieur de l'enceinte au lieu de générer une dépression en air. Cet inertage consiste à générer une dépression d'azote comprise par exemple entre -120 MPa et -80 MPa, limitant les risques d'échauffement résultant d'une réaction exothermique liée à une éventuelle évolution du degré d'oxydation de l'oxyde d'uranium. De manière avantageuse, afin d'augmenter la sécurité, une dépression en air additionnelle est prévue dans le cas où la dépression en azote n'assurerait plus le confinement dynamique.

Ensuite, les sacs sont ouverts pour permettre à la poudre de s'écouler à travers les grilles vers la trémie 60 et dans le réservoir 4. Le découpage se fait à travers les ronds de gant, un outil tranchant étant prévu dans l'enceinte. On peut prévoir qu'il se fasse de manière automatique avec un ou des outils tranchants escamotables disposés au niveau des grilles, qui seraient déployés lorsque l'on souhaite découper les sacs.

Le premier 81 et deuxième 83 sac du fût, la bonnette du fût et le sac garnissant l'intérieur de l'enceinte sont ensuite évacués via le rond de sac 67.2, comme un déchet dans un conteneur étanche.

La poudre traverse la grille. On peut prévoir des mouvements de va-et vient horizontaux sur la poudre pour faciliter son passage à travers les grilles, ces mouvements étant appliqués manuellement ou automatiquement par exemple au moyen d'un vibreur.

Par ailleurs, le fût 2 est ensuite libéré du corps cylindrique creux 14, le couvercle est remis en place et le fût peut être réutilisé. En effet sa surface intérieure n'a pas été souillée par la poudre. Le procédé de vidange de fût et de transfert du matériau en poudre est particulièrement adapté à la manipulation de matériau en poudre nécessitant des précautions importantes. Cependant, celui-ci n'est en aucun limitatif. En effet, le nombre de sacs de confinement dépend du niveau de dangerosité des poudres manipulées. Par exemple le deuxième sac 83 peut être omis, ainsi que le troisième sac 84 dans l'enceinte.

L'installation selon la présente invention associée au stockage de la poudre dans un sac permet de simplifier les moyens de confinement, en effet il n'est plus nécessaire de prévoir de confiner la poudre en permanence, mais uniquement lors de l'ouverture du sac.

## Revendications

1. Dispositif de manutention (D) de fût vers un ensemble trémie (T) pour le transfert d'au moins un matériau en poudre contenu dans le fût (2) vers une zone de stockage dudit matériau, ledit fût (2) contenant au moins un sac (83) fermé contenant ledit au moins un matériau en poudre, ledit dispositif de manutention comportant un châssis (31) destiné à être suspendu à un palan (8), un corps cylindrique creux (14) monté dans le châssis (31) apte à pivoter autour d'un axe horizontal (Y) perpendiculaire à un axe longitudinal (X) du corps cylindrique creux (14), le corps cylindrique creux (14) comportant une première extrémité longitudinale ouverte (14.2), une deuxième extrémité longitudinale (14.1) munie de moyens d'obturation (16) de ladite deuxième extrémité (14.1), lesdits moyens d'obturation (16) étant escamotables, le corps cylindrique creux (14) présentant des dimensions intérieures permettant l'introduction du fût (2) dans le corps cylindrique creux (14), des moyens d'immobilisation (10) du fût (2) dans le corps cylindrique (14) creux et des moyens aptes à provoquer un rotation (12) de 180° du corps cylindrique creux (14) autour de son axe de rotation (Y) par rapport au châssis (31), ledit corps cylindrique creux (14) contenant le fût (2) étant destiné à pénétrer dans l'ensemble trémie (T).

2. Dispositif de manutention de fût selon la revendication 1, comportant des moyens de verrouillage (34) du corps cylindrique creux (14) dans une position de retournement.

3. Dispositif de manutention de fût selon la revendication 1 ou 2, dans lequel les moyens d'obturation escamotables (16) comportent au moins deux pétales articulés (18) en rotation sur le corps cylindrique creux (14) et des moyens d'actionnement desdits pétales comprenant au moins un actionneur linéaire (26) monté sur le corps cylindrique creux (14) lié aux pétales (18) par des biellettes (27).

4. Dispositif de manutention de fût selon la revendication 3, dans lequel l'actionneur linéaire (26) est monté sur le corps cylindrique creux (14) à l'opposé de son extrémité obturée (14.1), ledit actionneur linéaire (26) étant connecté aux biellettes (27) au moyen d'un tube mobile (258) le long de l'axe longitudinal (X) du corps cylindrique creux (14) et formant une paroi extérieure dudit corps cylindrique creux (14).

5. Dispositif de manutention de fût selon la revendication 1 à 4, dans lequel les moyens d'immobilisation (10) sont tels qu'ils viennent en contact avec le fût (2) dans sa partie médiane, les moyens d'immobilisation (10) comportant avantageusement au moins deux mors de serrage (20) destinés à venir en contact avec la surface extérieure du fût et des moyens
aptes à appliquer et à maintenir appuyés les mors de serrage sur le fût.

6. Dispositif de manutention de fût selon l'une des revendications 1 à 5, dans lequel les moyens de retournement (12) comportent une roue dentée (37) en prise avec l'axe de rotation du corps cylindrique creux (14), une roue dentée (38) sur le châssis (31), un élément de transmission (39) reliant les deux roues dentées (37, 38), et des moyens de mise en rotation de la roue dentée (38) sur le châssis (31).

7. Ensemble trémie comportant une trémie (60) destinée à être raccordée par son extrémité aval à un réservoir (4) de matériau en poudre et une enceinte (62) étanche montée de manière étanche sur l'extrémité amont de la trémie (60), ladite enceinte (62) comportant une paroi latérale (64), un fond du côté de la trémie et une ouverture (66) opposée audit fond, destinée à permettre l'introduction, dans l'enceinte (62), du fût (2) maintenu dans le corps cylindrique creux (14) du dispositif de manutention (D) selon l'une des revendications 1 à 6, le fût (2) étant en position retournée, l'ouverture vers le bas, l'enceinte (62) comporte également un couvercle (68) pour fermer de manière étanche ladite ouverture, des moyens d'accès étanche (67.1) pour intervenir dans l'enceinte (62) et des moyens de transfert (67.2) de manière étanche des objets entre l'intérieur de l'enceinte et l'extérieur de celle-ci, le fond de l'enceinte (62) étant formé au moins en partie par au moins une grille (69) disposée entre l'enceinte (62) et la trémie (60).

8. Ensemble trémie selon la revendication 7, dans lequel les dimensions intérieures de l'enceinte (62) est de l'ouverture (66) de l'enceinte (62) sont telles qu'elles permettent l'introduction du corps cylindrique creux (14) et du châssis (31) entourant le corps cylindrique creux (14) dans l'enceinte (62).

9. Ensemble trémie selon la revendication 7 ou 8, comportant une enveloppe consommable (84) garnissant l'intérieur de la paroi latérale de l'enceinte (62) et le fond de l'enceinte (62).

10. Installation de transfert de poudre d'un fût dans un réservoir comportant au moins un dispositif de manutention (D) selon l'une des revendications 1 à 6 et un ensemble trémie (T) selon la revendication 7 ou 8.

11. Procédé de transfert de matériau en poudre contenu dans un fût vers un réservoir dans une installation selon la revendication 10, le matériau en poudre étant stocké dans au moins un premier sac (81) dans le fût (2), comportant les étapes :
- ouverture du fût (2),
- mise en place du corps cylindrique creux (14) autour du fût (2), les moyens d'obturation (16) étant disposés au dessus de l'ouverture du fût (2),
- immobilisation du fût (2) dans le corps cylindrique creux (14),
- retournement du fût (2),
- mise en place du corps cylindrique creux (14) et du fût (2) dans l'enceinte (62),
- actionnement des moyens d'obturation (16) pour permettre la chute dudit premier sac (81) de matériau en poudre, ledit premier sac (81) reposant alors sur la grille (69),
- retrait du corps cylindrique creux et du fût (14),
- fermeture de l'ouverture (66) de l'enceinte (62) de manière étanche,
- mise en route du système de dépression,
- ouverture du premier sac (81),
- vidange du premier sac (81) dans l'enceinte (62),
- retrait du premier sac (81).

12. Procédé de transfert selon la revendication 11, dans lequel le fût (2) comporte un deuxième sac (83) garnissant l'intérieur du fût (2) dans lequel est disposé le premier sac (81) contenant directement le matériau en poudre, comportant l'étape de mise en place d'une bonnette (82) sur l'ouverture du fût (2) après ouverture de celui-ci, le deuxième sac (83) garnissant l'intérieur du fût (2) et la bonnette (82) chutant dans l'enceinte (62) en même temps que le premier sac (81) contenant directement le matériau en poudre, ledit deuxième sac (83) étant perforé lors de l'ouverture du premier sac (81) contenant directement la poudre.

13. Procédé de transfert selon la revendication 11 ou 12, comportant, avant l'introduction du corps cylindrique creux (14) et du fût (2) dans l'enceinte (62), l'étape de mise en place d'une enveloppe (84) dans l'enceinte (62) recouvrant sa paroi latérale et son fond, ladite enveloppe (84) étant perforée lors de l'ouverture du premier sac (81) contenant directement la poudre.

14. Procédé de transfert selon la revendication 11, 12 ou 13, comportant l'étape de mise en place d'une bonnette (86) sur l'ouverture (66) de l'enceinte (62) après le retrait du corps cylindrique creux (14).

## Patentansprüche

1. Handhabungsvorrichtung (D) für ein Fass bei einer Trichteranordnung (T) für den Transfer wenigstens eines in dem Fass (2) enthaltenen Pulvermaterials hin zu einer Zone zur Lagerung des Materials, wobei das Fass (2) wenigstens einen geschlossenen Sack (83) enthält, der das wenigstens eine Pulvermaterial enthält, wobei die Handhabungsvorrichtung ein Gestell (31) umfasst, das dazu ausgelegt ist, an einer Winde (8) aufgehängt zu sein, einen in dem Gestell (31) montierten zylindrischen Hohlkörper (14), der dazu ausgelegt ist, um eine horizontale Achse (Y) zu schwenken, die orthogonal ist zu einer longitudinalen Achse (X) des zylindrischen Hohlkörpers (14), wobei der zylindrische Hohlkörper (14) ein erstes offenes longitudinales Ende (14.2) umfasst, ein zweites longitudinales Ende (14.1), das mit Mitteln (16) zum Verschließen des zweiten Endes (14.1) ausgestattet ist, wobei die Verschlussmittel (16) einziehbar sind, wobei der zylindrische Körper (14) Innenabmessungen aufweist, die das Einbringen des Fasses (2) in den zylindrischen Hohlkörper (14) erlauben, ferner Mittel (10) zur Immobilisierung des Fasses (2) in dem zylindrischen Hohlkörper (14) sowie Mittel (12), die dazu ausgelegt sind, eine Drehung des zylindrischen Hohlkörpers (14) um 180° um seine Drehachse (Y) bezüglich des Gestells (31) zu bewirken, wobei der zylindrische Hohlkörper (14), der das Fass (2) enthält, dazu ausgelegt ist, in die Trichteranordnung (T) einzudringen.

2. Handhabungsvorrichtung für ein Fass nach Anspruch 1, umfassend Mittel (34) zur Verriegelung des zylindrischen Hohlkörpers (14) in einer Wendeposition.

3. Handhabungsvorrichtung für ein Fass nach Anspruch 1 oder 2, bei der die einziehbaren Verschlussmittel (16) wenigstens zwei Blätter umfassen, die drehbar an dem zylindrischen Hohlkörper (14) angelenkt sind, sowie Mittel zur Betätigung der Blätter, umfassend wenigstens ein Linear-Betätigungselement (26), das an den zylindrischen Hohlkörper (14) montiert und durch Gestänge (27) mit den Blättern (18) verbunden ist.

4. Handhabungsvorrichtung für ein Fass nach Anspruch 3, bei der das Linear-Betätigungselement (26) an dem zylindrischen Hohlkörper (14) seinem verschlossenen Ende (14.1) gegenüberliegend montiert ist, wobei das Linear-Betätigungselement (26) mit dem Gestänge (27) mittels eines Rohrs (258) verbunden ist, das entlang der longitudinalen Achse (X) des zylindrischen Hohlkörpers (14) beweglich ist und eine Außenwand des zylindrischen Hohlkörpers (14) bildet.

5. Handhabungsvorrichtung für ein Fass nach Anspruch 1 bis 4, bei der die Immobilisierungsmittel (10) derart ausgelegt sind, dass sie mit dem Fass (2) in seinem Mittelbereich in Kontakt gelangen, wobei die Immobilisierungsmittel (10) vorzugsweise wenigstens zwei Klemmbacken (20) umfassen, die dazu ausgelegt sind, in Kontakt mit der Außenoberfläche des Fasses zu gelangen, sowie Mittel, die dazu ausgelegt sind, die Klemmbacken an das Fass zu drücken und gedrückt zu halten.

6. Handhabungsvorrichtung für ein Fass nach einem der Ansprüche 1 bis 5, bei der die Wendemittel (12) ein Zahnrad (37) in Eingriff mit der Drehachse des zylindrischen Hohlkörpers (14) umfassen, ferner ein Zahnrad (38) an dem Gestell (31), ein die zwei Zahnräder (37, 38) verbindendes Übertragungselement (39), sowie Mittel zum In-Drehung-Versetzen des Zahnrads (38) an dem Gestell (31).

7. Trichteranordnung, umfassend einen Trichter (60), der dazu ausgelegt ist, an seinem stromabwärtigen Ende mit einem Gefäß (4) für Pulvermaterial verbunden zu sein, und einen Behälter (62), der in dichter Weise am stromaufwärtigen Ende des Trichters (60) montiert ist, wobei der Behälter (62) eine Seitenwand (64), einen Boden an der Seite des Trichters sowie eine dem Boden gegenüberliegende Öffnung (66) umfasst, die dazu ausgelegt ist, das Einbringen des Fasses (2), das in dem zylindrischen Hohlkörper (14) der Handhabungsvorrichtung (D) nach einem der Ansprüche 1 bis 6 gehalten wird, in den Behälter (62) zu erlauben, wobei das Fass (2) sich in der Wendeposition mit der Öffnung nach unten befindet, wobei der Behälter (62) ferner einen Deckel (68) zum Schließen der Öffnung in dichter Weise umfasst, ferner dichte Zugriffsmittel (67.1) zum Intervenieren in dem Behälter (62), sowie Mittel (67.2) zum Transferieren von Objekten zwischen dem Inneren des Behälters und dem Äußeren desselben in dichter Weise, wobei der Boden des Behälters (62) wenigstens teilweise durch wenigstens ein Gitter (69) gebildet ist, das zwischen dem Behälter (62) und Trichter (60) angeordnet ist.

8. Trichteranordnung nach Anspruch 7, bei der die Innenabmessungen des Behälters (62) und der Öffnung (66) des Behälters (62) derart sind, dass sie das Einbringen des zylindrischen Hohlkörpers (14) sowie des Gestells (31), das den zylindrischen Hohlkörper (14) umgibt, in den Behälter (62) erlauben.

9. Trichteranordnung nach Anspruch 7 oder 8, umfassend eine verbrauchbare Hülle (84), die das Innere der Seitenwand des Behälters (62) und den Boden des Behälters (62) verkleidet.

10. Anlage zum Transfer von Pulver von einem Fass in ein Gefäß, umfassend wenigstens eine Handhabungsvorrichtung (D) nach einem der Ansprüche 1 bis 6 sowie eine Trichteranordnung (T) nach Anspruch 7 oder 8.

11. Verfahren zum Transferieren von Pulvermaterial, das in einem Fass enthalten ist, hin zu einem Gefäß in einer Anlage nach Anspruch 10, wobei das Pulvermaterial in wenigstens einem ersten Sack (81) in dem Fass (2) gespeichert ist, umfassend die Schritte:
- Öffnen des Fasses (2),
- Platzieren des zylindrischen Hohlkörpers (14) um das Fass (2) herum, wobei die Verschlussmittel (16) über der Öffnung des Fasses (2) angeordnet werden,
- Immobilisieren des Fasses (2) in dem zylindrischen Hohlkörper (14),
- Wenden des Fasses (2),
- Platzieren des zylindrischen Hohlkörpers (14) und des Fasses (2) in dem Behälter (62),
- Betätigen der Verschlussmittel (16), um den Fall des ersten Sacks (81) von Pulvermaterial zu ermöglichen, wobei der erste Sack (81) dann auf dem Gitter (69) ruht,
- Zurückziehen des zylindrischen Hohlkörpers und des Fasses (14),
- Schließen der Öffnung (66) des Behälters (62) in dichter Weise,
- Einschalten des Unterdrucksystems,
- Öffnen des ersten Sacks (81),
- Leeren des ersten Sacks (81) in den Behälter (62),
- Zurückziehen des ersten Sacks (81).

12. Transferverfahren nach Anspruch 11, bei dem das Fass (2) einen zweiten Sack (83) umfasst, der das Innere des Fasses (2) verkleidet, in dem der erste Sack (81) angeordnet ist, welcher direkt das Pulvermaterial enthält, umfassend den Schritt des Platzierens eines Kappes (82) auf der Öffnung des Fasses (2) nach seinem Öffnen, wobei der zweite Sack (83), der das Innere des Fasses (2) und das Kappe (82) verkleidet, zum gleichen Zeitpunkt in den Behälter (62) fällt wie der erste Sack (81), der direkt das Pulvermaterial enthält, wobei der zweite Sack (83) während des Öffnens des ersten Sacks (81), der direkt das Pulver enthält, perforiert wird.

13. Transferverfahren nach Anspruch 11 oder 12, umfassend, vor dem Einbringen des zylindrischen Hohlkörpers (14) und des Fasses (2) in den Behälter (62), den Schritt des Platzierens einer Hülle (84) in dem Behälter (62), die seine Seitenwand und seinen Boden bedeckt, wobei die Hülle (84) während des Öffnens des ersten Sacks (81), der direkt das Pulver enthält, perforiert wird.

14. Transferverfahren nach Anspruch 11, 12 oder 13, umfassend den Schritt des Platzierens eines Kappes (86) auf der Öffnung (66) des Behälters (62) nach dem Zurückziehen des zylindrischen Hohlkörpers (14).

## Claims

1. A drum-handling device (D) leading to a hopper assembly (T) for transferring at least one powder material contained in the drum (2) towards an area for storage of said material, said drum (2) containing at least one closed bag (83) containing said at least one powder material, said handling device comprising a frame (31) configured to be suspended from a hoist (8), a hollow cylindrical body (14) installed in the frame (31) which can pivot around a horizontal axis (Y) perpendicular to a lengthways axis (X) of the hollow cylindrical body (14), the hollow cylindrical body (14) comprising a first open lengthways end (14.2), a second lengthways end (14.1) equipped with means (16) for closing said second end (14.1), said closing means (16) being retractable, the internal dimensions of the hollow cylindrical body (14) being such that they allow the drum (2) to be introduced into the hollow cylindrical body (14), this body having means (10) of immobilising the drum (2) in the hollow cylindrical body (14), and means able to cause a 180° rotation (12) of the hollow cylindrical body (14) around its axis of rotation relative to the frame (31), and said hollow cylindrical body (14) containing the drum (2) being configured to enter into the hopper assembly (T).

2. A drum-handling device according to claim 1, comprising means (34) of locking the hollow cylindrical body (14) in an upside-down position.

3. A drum-handling device according to claims 1 or 2, in which the retractable closing means (16) comprise at least two lobes (18) connected such that they are able to rotate on the hollow cylindrical body (14), and means of operating said lobes comprising at least one linear actuator (26) installed on the hollow cylindrical body (14) connected to the lobes (18) by connecting rods (27).

4. A drum-handling device according to claim 3, in which the linear actuator (26) is installed on the hollow cylindrical body (14) opposite its closed end (14.1), said linear actuator (26) being connected to the connecting rods (27) by means of a tube (258) which can move along the lengthways axis (X) of the hollow cylindrical body (14), and which forms an outside wall of said hollow cylindrical body (14).

5. A drum-handling device according to claims 1 to 4, in which the immobilisation means (10) are such that they come into contact with the drum (2) in its median part, said immobilisation means (10) advantageously comprising at least two holding jaws (20) configured to come into contact with the external surface of the drum and means able to apply the holding jaws on to the drum, and keep them pressed on it.

6. A drum-handling device according to one of the previous claims, in which the means (12) for turning the drums upside-down comprise a toothed wheel (37) engaged with the rotary shaft of the hollow cylindrical body (14), a toothed wheel (38) on the frame (31), a transmission element (39) connecting the two toothed wheels (37, 38), and means to cause the toothed wheel (38) on the frame (31) to rotate.

7. A hopper assembly comprising a hopper (60) configured to be connected by its downstream end to a tank (4) of powder material, and a sealed enclosure (62) installed in sealed fashion on the upstream end of the hopper (60), said enclosure (62) comprising a side wall (64), a base on the side of the hopper and an aperture (66) opposite said base configured to enable the drum (2) held in the hollow cylindrical body (14) of the handling device (D) according to one of the claims 1 to 11, to be introduced into the enclosure (62), the drum (2) being in an upside-down position, with the aperture downwards; the enclosure (62) also comprises a cover (68) to close said aperture in sealed fashion, sealed access means (67.1) allowing intervention in the enclosure (62), and means for sealed transfer (67.2) of the objects between the interior of the enclosure and outside of it, the base of the enclosure (62) being formed at least partly by a grid (69) positioned between the enclosure (62) and the hopper (60).

8. A hopper assembly according to the previous claim, in which the internal dimensions of the enclosure (62) and of the aperture (66) of the enclosure (62) are then made such that they enable the hollow cylindrical body (14) and the frame (31) surrounding the hollow cylindrical body (14) to be introduced into the enclosure (62).

9. A hopper assembly according to claim 7 or 8, comprising a consumable sleeve (84) fitted to the interior of the side wall of the enclosure (62) and the base of the enclosure (62).

10. Equipment for transferring powder from a drum into a tank comprising at least one handling device (D) according to one of the claims 1 to 6 and a hopper assembly (T) according to claim 7 or 8.

11. A method for transferring powder material contained in a drum to a tank in equipment according to claim 10, the powder material being stored in at least a first bag (81) in the drum (2), comprising the following steps:
- opening of the drum (2),
- installation of the hollow cylindrical body (14) around the drum (2), the sealing means (16) being positioned above the aperture of the drum (2),
- immobilisation of the drum (2) in the hollow cylindrical body (14),
- turning of the drum upside-down (2),
- installation of the hollow cylindrical body (14) and of the drum (2) in the enclosure (62),
- operation of the sealing means (16) to allow said first bag (81) of powder material to fall, with said first bag (81) then resting on the grid (69),
- removal of the hollow cylindrical body and of the drum (14),
- closure of the aperture (66) of the enclosure (62) in sealed fashion,
- start-up of the depression system,
- opening of the first bag (81),
- emptying of the first bag (81) in the enclosure (62),
- removal of the first bag (81).

12. A method of transfer according to the previous claim, in which the drum (2) comprises a second bag (83) fitted to the interior of the drum (2), in which the first bag (81) directly containing the powder material is positioned, comprising the step of installation of a cap (82) on the aperture of the drum (2) after the latter is opened, the second bag (83) fitted to the interior of the drum (2) and the cap (82) falling into the enclosure (62) at the same time as the first bag (81) directly containing the powder material, and said second bag (83) being perforated when the first bag (81) directly containing the powder is opened.

13. A transfer method according to claim 11 or 12, comprising, before the hollow cylindrical body (14) and the drum (2) are introduced into the enclosure (62), the step of installation of a sleeve (84) in the enclosure (62) covering its side wall and its base, said sleeve (84) being perforated when the first bag (81) directly containing the powder is opened.

14. A transfer method according to claim 11, 12 or 13, comprising the step of installation of a cap (86) on the aperture (66) of the enclosure (62) after the removal of the hollow cylindrical body (14).
